# EUROPEAN PATENT SPECIFICATION

(11) **EP 3 442 332 B1**
(45) Date of publication and mention of the grant of the patent: **07.10.2020**
(21) Application number: 17724446.4
(22) Date of filing: 12.04.2017
(51) Int. Cl.: A01N 1/00, A01N 35/02, A01N 59/00, A01N 43/32

(54) **COMPOSITION FOR CONSERVATION/FIXATION OF BIOLOGICAL MATERIAL**
ZUSAMMENSETZUNG ZUR KONSERVIERUNG/FIXIERUNG BIOLOGISCHEN MATERIALES
COMPOSITION POUR LA PRESERVATION/FIXATION D'UN MATÉRIAU BIOLOGIQUE

(30) Priority: 12.04.2016 IT UA20162517
(43) Date of publication of application: 20.02.2019
(73) Proprietor: Fantozzi, Andrea, 67062 Magliano de' Marsi (AQ) (IT); Arcudi, Giovanni, 00198 Rome (IT)
(72) Inventor: Fantozzi, Andrea, 67062 Magliano de' Marsi (AQ) (IT); Arcudi, Giovanni, 00198 Rome (IT)
(74) Representative: Di Giovine, Paolo
(86) International application number: PCT/IB2017/052106
(87) International publication number: WO 2017/178981

(56) References cited:
- EP-A1- 0 775 439
- EP-A1- 2 025 226
- WO-A2-2011/138682
- Anonymous: "2-Butanone peroxide", GESTIS Substance Database, 1 September 2008 (2008-09-01), pages 1-17, XP055310263, Germany Retrieved from the Internet: URL:http://gestis-en.itrust.de/nxt/gateway .dll/gestis_en/070120.xml?f=templates&fn=p rint.htm&GLOBAL=G_&G_DIEXSL=GESTIS-PRINT.X SL [retrieved on 2016-10-13]
- CHANG ET AL: "Calorimetric studies on the thermal hazard of methyl ethyl ketone peroxide with incompatible substances", JOURNAL OF HAZARDOUS MATERIALS, ELSEVIER, AMSTERDAM, NL, vol. 141, no. 3, 6 March 2007 (2007-03-06) , pages 762-768, XP005917038, ISSN: 0304-3894, DOI: 10.1016/J.JHAZMAT.2006.07.062
- .: "Product Data Sheet: Butanox M50", , 1 December 2015 (2015-12-01), pages 1-4, XP055309983, The Netherlands Retrieved from the Internet: URL:http://www.pcpds.akzonobel.com/Polymer ChemicalsPDS/showPDF.aspx?pds_id=623 [retrieved on 2016-10-12]
- .: "European Commission Regulation EC 1048/2005", , 13 June 2005 (2005-06-13), pages 1-94, XP055379592, Brussels, Belgium Retrieved from the Internet: URL:https://publications.europa.eu/portal2 012-portlet/html/downloadHandler.jsp?ident ifier=df60b67b-132d-4031-9964-70286959e361 &format=pdf&language=en&productionSystem=c ellar&part= [retrieved on 2017-06-08]
- DATABASE WPI Week 200776 Thomson Scientific, London, GB; AN 2007-809087 -& JP 2007 197515 A (NIPPON OILS & FATS CO LTD) 9 August 2007 (2007-08-09)

## Description

### The technical field of the invention

This invention relates to a composition based on methyl ethyl ketone peroxide (MEKP), 1-isopropyl-2,2-dimethyltrimethylene diisobutyrate, diacetone alcohol, isobutyl alcohol and glycerol and its use in fixation and/or preservation of organic/biological material intended as organs, tissues and cells of animal or vegetable origin. The invention also relates to a method of embalming, which involves injecting such composition in the blood and/or lymphatic vascular system of an animal or vegetable organism or any part of it.

### The state of the technique (Background)

Since prehistoric times people have tried to preserve the bodies of the deceased to prevent deterioration. The techniques mainly used the removal of viscera, dehydration of the body, corpse impregnation with resins and various substances. Historians are inclined to think that the study of the techniques of embalming had begun in Egypt but it was also practiced by the ancient Assyrians, Persians and Shiites. Perhaps the initial interest for embalming and the first experiments were due to the discovery of corpses buried in the desert sand and preserved in a natural way. This type of burial would prevent humidity and air from getting to the corpse, limiting thus the decomposition. Some speculate that they began to practice embalming when corpses preserved were found in natron (sodium carbonate decahydrate), alkaline salts which abounds in Egypt.

Modern embalming benefits, as well known, from the discovery of formaldehyde by the chemist August Wilhelm von Hofmann (1867). This substance, then evolved into formalin, supplanted the then used arsenic.

Currently, after the immersion in liquid bactericides, they solutions derived from the original formaldehyde are injected in the anatomical cavities of corpses using an appropriate pump. Formaldehyde solution is more commonly used for tissue preservation and especially for embalming, is an aqueous solution, available commercially called formalin containing 37-50% of formaldehyde and 10-15% methanol as a stabilizer. From the stock solution common use dilutions are obtained (5-10 %).

In the health field it is used as a fixative/preservative of biological material and as a germicidal substance.

Although effective in the tissues fixation/preservation, formaldehyde has a number of disadvantages. In particular, it is irritating to ocular mucous and skin so much so that the occurrence of contact dermatitis is a risk ascertained for operators/technicians.

It has been reported that the formaldehyde at concentrations between 0.1 and 3 ppm causes irritation of the airways; for concentrations greater than 10 ppm sense of suffocation while exposures greater than 20 ppm can lead to pulmonary edema.

Furthermore, cases of asthma and respiratory impairment have been described in literature. In addition to these disadvantages different scientific studies conducted in experimental animals have demonstrated its potential carcinogenicity.

As for in humans, a recent review of the literature and the main Italian and international Oncology societies have shown that formaldehyde exposure increases the risk of onset of rhinopharyngeal and nasal cavity tumors and leukemias. Formaldehyde was, therefore, recognized as a carcinogen (carcinogenic 1/B classification by the European Commission through regulation 605/2014), it is irritating to the ocular and nasal mucous and skin; causes the onset of contact dermatitis, also, it is an ascertained occupational risk and falls within the art. 234 del D.lgs. 81/2008.

Even methyl alcohol, used as a stabilizer in the preparation of formalin, is known as a neurotoxin for both ingestion and inhalation of disperse vapours. Chronic exposure to aerial concentrations of vapors of methanol from 800-3000 ppm cause the buildup in the tissues with the formation of formic acid and subsequent metabolic acidosis and blindness. (cfr. Randall C. Baselt "Disposition of toxic drugs and chemicals in man" - Biomedical Publications Foster City (CA), 7 ed. 2004: 689-690).

EP 0 775 439 discloses compositions comprising dialkyl (C₁-C₆) ketone peroxide, glycerol, an alcohol and a marker, stain and/or aromatizing agent for the preservation of organic tissues.

EP 2 025 226 discloses the use of a water-based mixture comprising methyl ethyl ketone peroxide, by spraying for the disinfection and conservation of organic matter.

JP 2007 197515 discloses the use of a composition comprising methyl ethyl ketone peroxide and isopropyl-2,2-dimethyltrimethylene diisobutyrate for curing radical polymerized thermosetting resins.

The purpose of the present invention is to provide a composition for the fixation and/or preservation of organs, tissues, cells and organisms, alternative to those known. In addition, the purpose of this invention is to provide a solution which is not only effective but also devoid of the disadvantages described to the state of the technique for units having the same finality, such as formaldehyde/formalin.

### Summary of the invention

The objects of the present invention are as defined in the appended claims.

The technical problem posed and solved by this invention is to provide, as stated above, a composition for fixation and/or for the preservation of organic/biological material alternative to formaldehyde and with an improved efficacy and safety profile over current formulations with similar aims.

The solution to the problem above is the use of composition for the fixation and/or preservation of organic/biological material as defined in claim 1.

A second objective of the invention is a method of embalming corpses as defined in claim 5 comprising of a passage of injection in that corpse of composition of the invention as defined in claim 1.

A further objective of the invention is a process for the preparation of the composition here described as defined in claim 8.

Popular features of the present invention are the subject of dependent claims.

The composition described here is able to fix and/or maintain organic matter, such as isolated organs, tissues and cells of animal or vegetable origin, in an effective and comparable way to formaldehyde/formalin. The composition of the invention has been shown to have an improved safety profile than formaldehyde/formalin since none of the ingredients is placed on the 1-3 IARC lists of carcinogenic substances for humans, also, in experimental phases there was no irritating effect on the ocular mucous and on the skin for exposure to vapors or the onset of contact dermatitis in operators/technicians who handled the composition.

The composition, due to its effective fixation and/or preservation capacity of organic material and its low toxicity, is suitable for the application for the use in the cure of encoffining as well in areas such as forensic medicine, anatomy, pathological anatomy, criminology, biology, archeology, veterinary medicine, botany and, in general, in all those sectors where the preservation, fixation and preparation of organs, tissues or cells is required.

In summary, the composition of this invention combines technical properties and low toxicity which make it more beneficial than the compositions/substances currently known.

Other benefits, features and modalities of use of the invention will result obvious from the subsequent detailed description of some embodiments, presented for illustrative purpose without limitation.

### Detailed description of the preferred forms of realization

The following is a detailed description of various objects of the invention.

### Composition

The composition described here, as stated above, it is appropriate to the fixation and/or preservation of biological/organic materials such as organs, tissues and cells of animal and/or vegetable origin. Preferably, the biological material is of human origin.

The composition includes as main active ingredient a solution consisting of methyl ethyl ketone peroxide also known as 2-butanone peroxide or MEK peroxide (MEKP) present in a percentage between 30 and 40%, methylethylketone between 0 and 5%, hydrogen peroxide between 0 and 5%, 1-isopropyl-2,2-dimethyltrimethylene diisobutyrate between 40 and 50% and diacetone alcohol between 5 and 10%. The main ingredient is the ingredient present in the compositions in greater quantities. In particular, the quantity of the described solution in the composition is between 30% and 70% by volume of the composition.

The composition also includes iso-butyl alcohol and glycerin. In particular, glycerin is present in a percentage between 35% and 15% (in volume of total composition). Iso-butyl alcohol can be present in a percentage between 35% and 15%.

In a form of realization of the invention, the composition comprises 50% by weight of the solution referred to in point 10, 25% by weight of glycerin and 25% by volume of isobutyl alcohol.

According to the applicative purposes the composition can further include a dye and/or an aromatic agent too. The amount of the dye and/or of the aromatic agent within the composition may vary between 0% and 10% of the composition, resulting in proportional and parallel reduction of the percentages of the other components.

Any coloring and flavoring substance known in the state of the art and deemed suitable by the person skilled in the branch for the purposes of this invention may be embodied in the composition described here.

The composition as described above can be prepared using any method considered by the certification of useful for the purpose of this invention. For example, a possible preparation procedure may include a mixture of methylethylketone peroxide with isobutyl alcohol and then add to the mixture of glycerol. That procedure also could include an additional step of adding the dye and/or the aromatic agent to the mix including MEKP, isobutyl, and glycerol. Mixing can be conducted at room temperature.

The composition of which at the invention may be used as such, in diluted form or with dye and/or flavoring according to the applicative technical requirements, without constituting a new composition.

### Use and Method

The use of the composition of the invention for the fixation and/or preservation of organic/biological materials is hereby described.

By the term "fixation and / or preservation of organic tissues", this patent application refers to the slowing of the chemical and physical deterioration processes that cause a biological material following the removal/expulsion from its physiological environment or of the death of the organism.

For the purposes of the present invention for organic material are meant isolated organs, tissues, cells of animal and vegetable origin. In particular, the use of the composition as described here is in the fixation and/or preservation of organic material of animal and vegetable origin, including: the full body animal, isolated organs, tissues, cells, the plant or parts of it.

Therefore, a subject of the present invention is also a method as defined in claim 5 for the temporarily or perpetually embalming of a deceased animal body comprising a passage of injection into the vascular system of the composition. In addition is the subject of this invention also the use of the mixture for the antiparasitic treatment and preservation of wood-based materials.

### EXPERIMENTAL SECTION

The composition of the invention was tested in the laboratory for the conservation and anatomical preparation of organic tissues of animal origin including human tissue. Experiments have shown that the composition described here is characterized by low toxicity and high conservative efficacy.

Tests that have been conducted on tissues, isolated organs and animal corpses in toto and have demonstrated the conservative efficacy of the formulation for over six months.

In this case, the treated parts have been retained over time, at room temperature, shape, volume, elasticity, indicating the absence of putrefactive phenomena.

Tests were performed both by imbibition (immersion of the sample in the solution) and by superficial application (brushing the outer surfaces of the sample), and by forced inoculation of the fluid in the anatomic and vascular cavities.

We treated and examined:
vertebrate animals (36 specimens) found lifeless, by gathering in mountain areas where there were abundant communities of marten, wild boar, crow, mouse, squirrels etc;
invertebrate animals (14 specimens) found lifeless by collecting on mountain roads in the spring;
tissues, organs isolated from human corpses of anatomical-pathological or forensic expertise.

On the basis of the tests carried out the results were even better in the preservation of nucleic acids.

This allows the investigation of "molecular profiling" to also use archive material, allowing to expand the case study.

In addition, the formulation to the study, unlike formaldehyde (and formalin) does not seem to interfere with forensic investigations, in particular toxicological ones, as it reduces the enzymatic activity and does not seem to alter, by chemical reaction, exogenous molecules that may be present in tissues and biological fluids and does not interfere with the determination of ethyl alcohol.

This property allows the use of tissues for judicial purposes even after an eventual embalming or encoffining in case of exhumation and in the case of isolated and preserved organs.

The present invention was so far described with reference to favorite forms of realization. It means that there may be other forms of realization that relate to the same inventive nucleus, as defined by the scope of protection of the claims 1 to 8 below.

## Claims

1. Use of a non-aqueous liquid composition comprising methylethylketone peroxide (MEKP) for the fixation and/or preservation of organic materials wherein said composition comprises as its main active ingredient, present in a percentage from 30 to 70% by volume of the total composition, a solution consisting of methylethylketone peroxide (MEKP) between 30 and 40%, methylethylketone between 0 and 5%, hydrogen peroxide between 0 and 5%, 1-isopropyl-2,2-dimethyltrimethylene diisobutyrate between 40 and 50% and diacetone alcohol between 5 and 10%.

2. Use according to claim 1 wherein said composition further comprises glycerin in a percentage between 15% and 35% by volume of the total composition.

3. Use according to claims 1 or 2 wherein said composition further comprises isobutyl alcohol in a percentage between 15 and 35% by volume of the total composition and/or a dye and/or an aromatic agent.

4. Use according to any of the claims from 1 to 3, wherein said organic materials are organs, tissues and cells of animal or vegetable origin.

5. Method for perpetual and/or temporary embalming of a dead animal body, preferably human, comprising a step of injection in the blood and/or lymphatic system of a liquid composition as defined in any of the claims from 1 to 4.

6. Non-aqueous liquid composition as defined in any of the claims from 1 to 4 for the fixation and/or preservation of organic materials.

7. Composition according to the preceding claim, wherein said materials are organs, tissues, cells of animal or vegetable origin.

8. Process for the preparation of a composition as defined in claim 3 comprising a step of mixing the solution containing methylethylketone peroxide with isobutyl alcohol and subsequent addition to the mixture of Glycerin.

## Patentansprüche

1. Verwendung einer nichtwässrigen flüssigen Komposition umfassend Methylethylketonperoxid (MEKP) zur Fixierung und/oder Koservierung von organischen Materialien, wobei die Komposition als ihren Hauptwirkstoff, vorhanden in einem Prozentsatz von 30 bis 70 Volumenprozent der Gesamtkomposition, eine Lösung bestehend aus Methylethylketonperoxid (MEKP) zwischen 30 und 40 Prozent, Methylethylketon zwischen 0 und 5 Prozent, Hydrogenperoxid zwischen 0 und 5 Prozent, 1-Isopropyl-2,2-Dimethyltrimethylethylendiisobutyrat zwischen 40 und 50 Prozent und Diacetonalkohol zwischen 5 und 10 Prozent umfasst.

2. Verwendung gemäß Anspruch 1, wobei die Komposition ferner Glycerin in einem Prozentsatz zwischen 15 Prozent und 35 Volumenprozent der Gesamtkomposition umfasst.

3. Verwendung gemäß Anspruch 1 oder 2, wobei die Komposition ferner Isobutylalkohol mit einem Prozentsatz zwischen 15 und 35 Volumenprozent der Gesamtkomposition und/oder einen Farbstoff und/oder ein aromatisches Mittel umfasst.

4. Verwendung gemäß einem der Ansprüche 1 bis 3, wobei die organischen Materialien Organe, Gewebe und Zellen tierischen oder pflanzlichen Ursprungs sind.

5. Verfahren zur dauerhaften und/oder vorübergehenden Einbalsamierung eines toten tierischen Körpers, vorzugsweise eines Menschen, umfassend einen Schritt der Injektion einer flüssigen Komposition, wie sie in einem der Ansprüche 1 bis 4 definiert ist, in das Blut- und/oder Lymphsystem.

6. Nichtwässrige flüssige Komposition, wie sie in einem der Ansprüche 1 bis 4 definiert ist, zur Fixierung und/oder Konservierung von organischen Materialien.

7. Komposition gemäß einem der vorangehenden Ansprüche, wobei die Materialien Organe, Gewebe, Zellen tierischen oder pflanzlichen Ursprungs sind.

8. Verfahren zur Herstellung einer Komposition, wie sie in Anspruch 3 definiert ist, umfassend einen Schritt des Mischens der Methylethylketonperoxid umfassenden Lösung mit Isobutylalkohol und anschließendem Zugeben von Glycerin.

## Revendications

1. Utilisation d'une composition liquide non aqueuse comprenant du peroxyde de méthyléthylcétone (MEKP) pour la fixation et/ou la conservation de matières organiques dans laquelle ladite composition comprend comme ingrédient actif principal, présent en un pourcentage de 30 à 70% en volume de la composition totale, une solution constituée de peroxyde de méthyléthylcétone (MEKP) entre 30 et 40%, de méthyléthylcétone entre 0 et 5%, de peroxyde d'hydrogène entre 0 et 5%, de diisobutyrate de 1-isopropyl-2,2-diméthyltriméthylène entre 40 et 50% et d'alcool diacétonique entre 5 et 10%.

2. Utilisation selon la revendication 1, dans laquelle ladite composition comprend en outre de la glycérine en un pourcentage entre 15% et 35% en volume de la composition totale.

3. Utilisation selon la revendication 1 ou 2, dans laquelle ladite composition comprend en outre de l'alcool isobutylique en un pourcentage entre 15 et 35% en volume de la composition totale et/ou un colorant et/ou un agent aromatique.

4. Utilisation selon l'une quelconque des revendications 1 à 3, dans laquelle lesdits matériaux organiques sont des organes, des tissus et des cellules d'origine animale ou végétale.

5. Procédé d'embaumement perpétuel et/ou temporaire d'un cadavre animal, de préférence humain, comprenant une étape d'injection dans le sang et/ou le système lymphatique d'une composition liquide telle que définie dans l'une quelconque des revendications 1 à 4.

6. Composition liquide non aqueuse telle que définie dans l'une quelconque des revendications 1 à 4 pour la fixation et/ou la conservation de matières organiques.

7. Composition selon la revendication précédente, dans laquelle lesdits matériaux sont des organes, des tissus, des cellules d'origine animale ou végétale.

8. Procédé de préparation d'une composition telle que définie dans la revendication 3 comprenant une étape de mélange de la solution contenant du peroxyde de méthyléthylcétone avec de l'alcool isobutylique et une addition ultérieure au mélange de glycérine.
